# EUROPEAN PATENT APPLICATION

(11) **EP 2 357 027 A1**
(43) Date of publication of application: **17.08.2011**
(21) Application number: 09830423.1
(22) Date of filing: 02.12.2009
(51) Int. Cl.: A63F 13/00, A63F 13/10

(54) **GAME SYSTEM AND GAME PROGRAM**

(30) Priority: 02.12.2008 JP 2008307883
(71) Applicant: Konami Digital Entertainment Co., Ltd., Tokyo 107-8324 (JP)
(72) Inventor: INUBUSHI, Takashi, Tokyo 107-8324 (JP); NISHIURA, Hidetomo, Tokyo 107-8324 (JP); OIWA, Yoshiko, Tokyo 107-8324 (JP); NARAOKA, Hiroshi, Tokyo 107-8324 (JP)
(74) Representative: Haley, Stephen
(86) International application number: PCT/JP2009/070245
(87) International publication number: WO 2010/064657

(57) **Abstract**

A reroute table MT in which a new route is set to a reroute point Lr with respect to each of the routes R1, R2, R3 where a predetermined destination is set, a route determining portion 40d which determines the present route R, a position determining portion 40a which determines the position of moving body CA, and a reroute thinking portion 40e which determines whether the position of moving body CA reaches the reroute point Lr which is set for the present route by referring to the reroute table MT are comprised. The route determining portion 40d determines as the present route, the new route set to the reroute point Lr by referring to the reroute table MT, when the moving body CA reaches the reroute point Lr.

## Description

### Technical Field

The present invention relates to a game system and a game program for a game where a moving body, an operation object, is made to travel a predetermined route.

### Background Art

There is a well-known game system where a virtual car is made to travel a predetermined route to measure a lap time and/or execute a car race with the other cars. In such game system, it is also well-known that a radar image is displayed as a means for a player to recognize a position of his/her car in the route (for example, see the following patent literature 1).

### Citation List

### Patent Literature

PTL 1: JP 3475470 B

### SUMMARY OF INVENTION

### Problem to be Solved by Invention

However, the conventional car game system is designed such that the virtual car of the operation object is made to travel a route selected before the start of game, and not designed such that the virtual car can also roads except for the selected route. A car navigation system for a general car has a function to, when the car turns off a route after the route is determined to a destination, re-detect an alternative route to the destination. However, this proceeding requires a big amount of time and uses a big amount of memory.

Then, the present invention aims to provide a game system and a game program where the next route is detected without big proceeding loads, even if the car turns off the route where the car should travel.

### Solution to Problem

A game system as one aspect of the present invention solves the above problem by being configured as a game system comprising comprising: an operation input portion which accepts operations by a player; a game control position which controls a game where a plurality of routes are prepared, each of which is constructed so that a moving body as an operation object reaches a same destination through a plurality of roads extended like a web in a virtual region, and the traveling roads composing one of the routes are indicated for the moving body so that the moving body follows the route to reach the destination; and a display portion which displays a state that the moving body travels the route, wherein the game system further comprises: a route information storage portion which stores route information which is information for indicating each of the plurality of routes to the player; and a reroute table where, for each of the routes, to the reroute point which is set on each road off the route, a different route including the road off the route or a different route connecting to the road off the route is set as a new route, the game control portion comprises: a route determining portion which determines, from the plurality of routes, a present route which is a route where the moving body is made to travel; a position determining portion which determines a position of the moving body appropriately to the operation by the player; a route navigating portion which indicates the present route to the player based on the position of the moving body determined by the position determining portion and the route information of the present route; and a reroute thinking portion which, in reference to the reroute table, determines whether the position of the moving body determined by the position determining portion has got a predetermined relation with a reroute point set on the present route, and the route determining portion determines as the present route, when the reroute thinking portion determines that the position of the moving body has got the predetermined relation, the new route set to the reroute point in reference to the reroute table.

In the game system of the present invention, the route where the moving body is made to travel is composed of the plurality of roads. Therefore, the moving body can travel the roads except for the ones where the moving body should travel. Accordingly, for notifying the player of the direction and the road where the player should go ahead, the present route determined by the route determining portion is indicated to the player by the route navigating portion. In the case that the moving body enters a road off the present route, when it is determined by the reroute thinking portion that the moving body has got the predetermined relation with the reroute point, the reroute table is referred by the route determining portion. In the reroute table, a new route to be set as the next present route is set to each reroute point which is set on the road off the present route. Thereby, the route determining portion determines as the present route, in reference to the reroute table corresponding to the present route, the new route set to the reroute point which has got the predetermined relation with the moving body.

Thereby, the present route is switched to the new route. a route which is indicated by the route navigating portion is the present route after the switch, that is, the new route. As all of the routes are designed so as to reach the same destination, even if the route is switched to the other route, the moving body can reach the destination by following the present route which has been switched to. Therefore, even if the moving body travels off the present route, it is not necessary to reconstruct a route from the position existing off the present route to the destination. Only by switching the present route, a reroute process can be executed. Thereby, it is possible to reroute a route to the moving body reaches a predetermined destination without big loads and long processing time.

The "predetermined relation with the reroute point" includes a case that the position of the moving body exists within a predetermined distance from the reroute point, a case that the position of the moving body is the reroute point, a case that the moving body passes through the reroute point and the like. The reroute table may be a table where the reroute point and the the new route are correlated to each other for each route, or may be a table where the present route and the new route are correlated to the reroute point. As the navigation by the route navigating portion, a conventional way of indicating a specified route to a player can be applied to. For example, like a navigation image of a navigation system for a general car, the position of the moving body in the present route may be displayed so as to be distinguishably indicated, or the direction where the moving body should go ahead may be displayed at an appropriate timing.

The present invention includes a case that the start point of each route is the same point and a case that the start point of each route is not the same point. The road may be a way existing physically such as a road and train tracks, and may be a way not existing physically such as a water way and a skyway. It is enough that the moving body is a body traveling roads. The moving body may be a one representing an actual one or a fictional one. The present invention at a moment of starting the game may be determined by the player's selection, may be determined by the game system based on a play level of the player, a number of play times or the like, or may be determined at random.

The route information of each of the routes may be configured in such a way that the route forms a round route where the same destination is set as a start point. Thereby, it is possible to execute a game where the moving body goes round in a virtual region.

The route information may be map information where each of the route is represented distinguishably in the virtual region, and the route navigating portion may display on the display portion a navigation image where at leas one part of the present route is indicated taking the position of the moving body as a criterion. Thereby, like a navigation image of a navigation system for a general car, it is possible to display an image indicating the present position of the moving body in the present route.

The game system may further comprise a navigation table where navigation information for indicating a travelable direction is set to each of a plurality of navigation points located in each of the roads, and the route navigation portion may display on the display portion, when the position of the moving body determined by the position determining portion has got a predetermined relation with the navigation point, the navigation information set to the navigation point, in reference to the navigation table. If the navigation information is set as a sign indicating a travelable direction, it is possible to provide an atmosphere of a traffic sign on a general road. Moreover, it is possible to avoid the moving body going in a dangerous direction or a reverse direction.

A process maker for distinguishing each of the reroute points and the navigation points may be given to each of the reroute points and the navigation points, the navigation table and the reroute table may be configured as a process table in such a way that the navigation information corresponding to the process marker is set to the process marker given to each of the navigation points, and, to the process marker given each of the reroute points, the route corresponding to the reroute point is set as the present route together with the new route. Thereby, the game control portion can execute processes by referring to one process table.

The navigation table may be prepared for each of the routes, the plurality of navigation points may be provided on the corresponding route, the navigation information may be set so as to indicate a travelling direction of the corresponding route, and the route navigating portion may display on the display portion, when the position of the moving body determined by the position determining portion has got a predetermined relation with the navigation point, the navigation information set to the navigation point by referring to the navigation table of the present route. Thereby, for example, when the moving body reaches the navigation point, the traveling direction of the present route is displayed. Accordingly, if the navigation point is located at a point where the player could be lost, a diverging point or the like, it is possible to avoid the moving body going off the present route.

In the navigation table of each of the routes set as the new route, the navigation point may be further provided on the road which connects to the route, and to the navigation point, the navigation information for leading the moving body to the route is correlated. Thereby, when the moving body enters a route determined as the new route from a road off a route, the direction where the moving body should go ahead is displayed. Therefore, for example, it is possible to avoid the moving body entering a road different from the new route and going in a reverse direction at the moment of entering the route determined as the new route.

A process marker for distinguishing each of the reroute points and the navigation points in the virtual region may be given to each of the reroute points and the navigation points, and the navigation table and the reroute table for each of the routes may be configured as one process table, in which the process markers are set, the process markers being given respectively to the navigation points and the reroute points set for each of the routes, in such a way that the navigation information corresponding to each of the navigation points is set to the process marker given to the navigation point, and the new route set to each of the reroute points is set to the process marker given to the reroute point. Thereby, the game control portion can execute processes in each of the routes only by referring to one process table.

The game system may further comprise a sound output portion which outputs sound, and voice navigation information for representing the navigation information by voice may further set to each of the navigation points in the navigation table, and the route navigating portion may output through the sound output portion, when displaying the navigation information set to the navigation portion, a voice navigation by the voice navigation information set to the navigation point. Thereby, it is possible to lead the player to follow the present route by the voice navigation information as well as displaying the navigation information.

The plurality of roads extended like a web in the virtual region may be roads representing at least one part of general roads in a predetermined town, and the moving body may be a travelling body. Thereby, for example, it is possible to give to the player a feeling of travelling a town where the player has never been, and it is possible to increase entertainmentability of the game.

A game program of the present invention as one aspect of the present invention solves the above problem by being configured as a game program for making a computer function, the computer comprising: an operation input portion which accepts operations by a player; a game control position which controls a game where a plurality of routes are prepared, each of which is constructed so that a moving body as an operation object reaches a same destination through a plurality of roads extended like a web in a virtual region, and the traveling roads composing one of the routes are indicated for the moving body so that the moving body follows the route to reach the destination; and a display portion which displays a state that the moving body travels the route; a route information storage portion which stores route information which is information for indicating each of the plurality of routes to the player; and a reroute table where, for each of the routes, to the reroute point which is set on each road off the route, a different route including the road off the route or a different route connecting to the road off the route is set as a new route, wherein the game program makes the game control portion function as: a route determining portion which determines, from the plurality of routes, a present route which is a route where the moving body is made to travel; a position determining portion which determines a position of the moving body appropriately to the operation by the player; a route navigating portion which indicates the present route to the player based on the position of the moving body determined by the position determining portion and the route information of the present route; and a reroute thinking portion which, in reference to the reroute table, determines whether the position of the moving body determined by the position determining portion has got a predetermined relation with a reroute point set on the present route, and makes the route determining portion determine as the present route, when the reroute thinking portion determines that the position of the moving body has got the predetermined relation, the new route set to the reroute point in reference to the reroute table.

### Effects of the Invention

As mentioned above, according to the present invention, for each of the routes, the reroute table where the new route is set at the reroute point is prepared, and the route determining portion for determining the present route, the position determining portion for determining the position of the moving body, the route navigation portion for leading the player along the present route based on the position of the moving body and the the route information of the present route, and the reroute thinking portion for determining whether the the position of the moving body has got a predetermined relation with the reroute point by referring to the reroute table, are provided. The route determining portion, when the reroute thinking portion determines that the position of moving body has, determines the new route set to the reroute point as the present route. Thereby, it is possible to provide a game system and the like where the next route is detected without big proceeding loads, even if the car turns off the route where the car should travel.

### Brief Description of Drawings

[Fig.1] A diagram showing an example of a game image of a game of the present embodiment.
[Fig.2] A diagram showing general roads travelable for a car in the present embodiment.
[Fig.3] A diagram showing three routes set based on the general roads shown in Fig.2.
[Fig.4] A schematic showing a hardware configuration of the game system of the present embodiment.
[Fig.5] A diagram showing a state where the present route and the reference information are switched.
[Fig.6] A diagram showing a state where markers are given to the general roads shown in Fig.2.
[Fig.7] A diagram showing an example of coordinate table shown in Fig.4 .
[Fig.8] A diagram showing an example of sign table shown in Fig.4.
[Fig.9] A diagram showing an example of sound table shown in Fig.4.
[Fig.10] A diagram showing an example of marker table shown in Fig.4.
[Fig.11] A diagram showing a state where the processes at the moment of rerouting, the car movement, and the set route are correlated to each other.
[Fig.12] A flowchart showing processes executed in a game process.
[Fig.13] A diagram obtained by modifying Fig.6 for the high level embodiment.
[Fig.14] A diagram showing an example of marker table in the high level embodiment.
[Fig.15] A diagram showing a state of reference information posed by the switch of the present route in the high level embodiment.

### Embodiment for Executing Invention

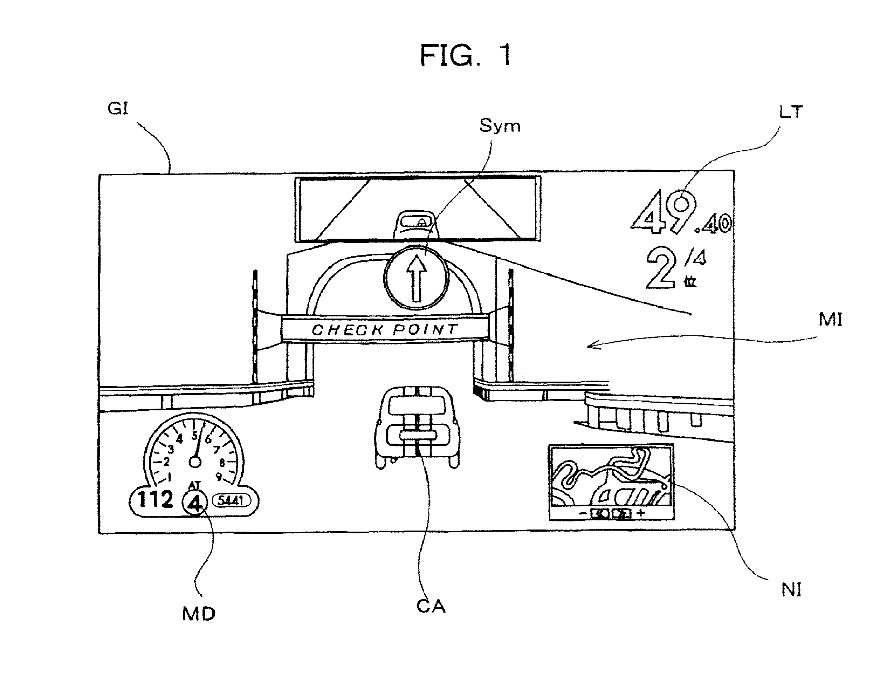

Fig.1 is a diagram showing a game image GI of a game which is provided by a game system of the present invention. The game system of the present invention provides the game such that a car CA as a moving body which is an operation object of a player is made to go round a predetermined round route three times, and the players competes for the fastest lap time. The game image GI has a main image MI showing a state that the car CA travels a road and a navigation image NI (hereinafter, referred to as the "navi image NI") for recognizing the present position of the car CA in the round route. In the main image MI, a sign Sym indicating a travelling direction where the car should travel, a meter display MD indicating a speed, a travel distance of the CA and the like, and elapsed time LT indicating the elapsed time after the start are displayed.

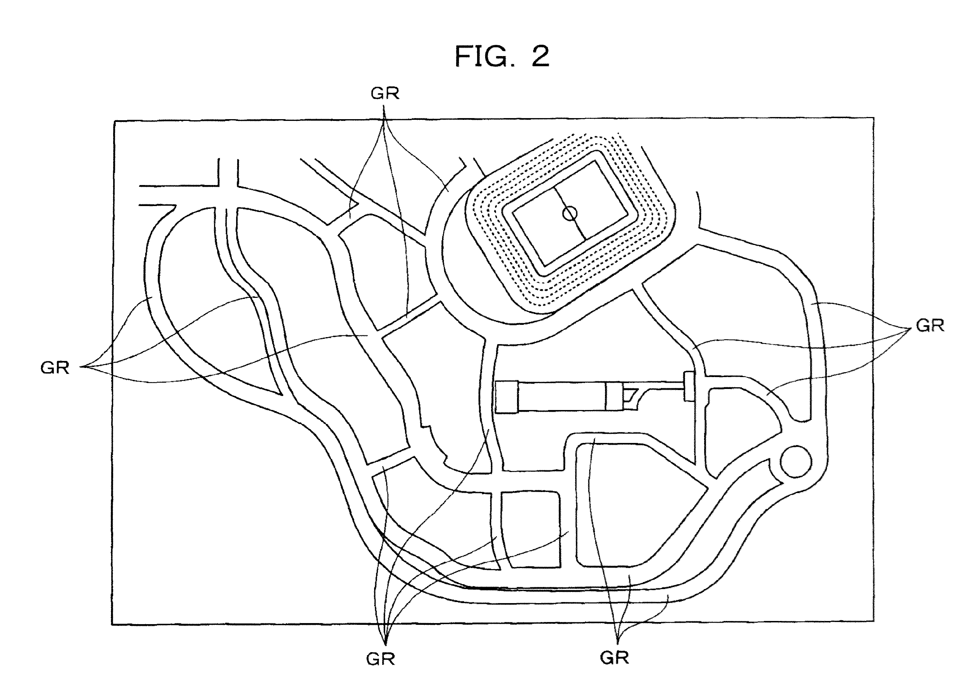

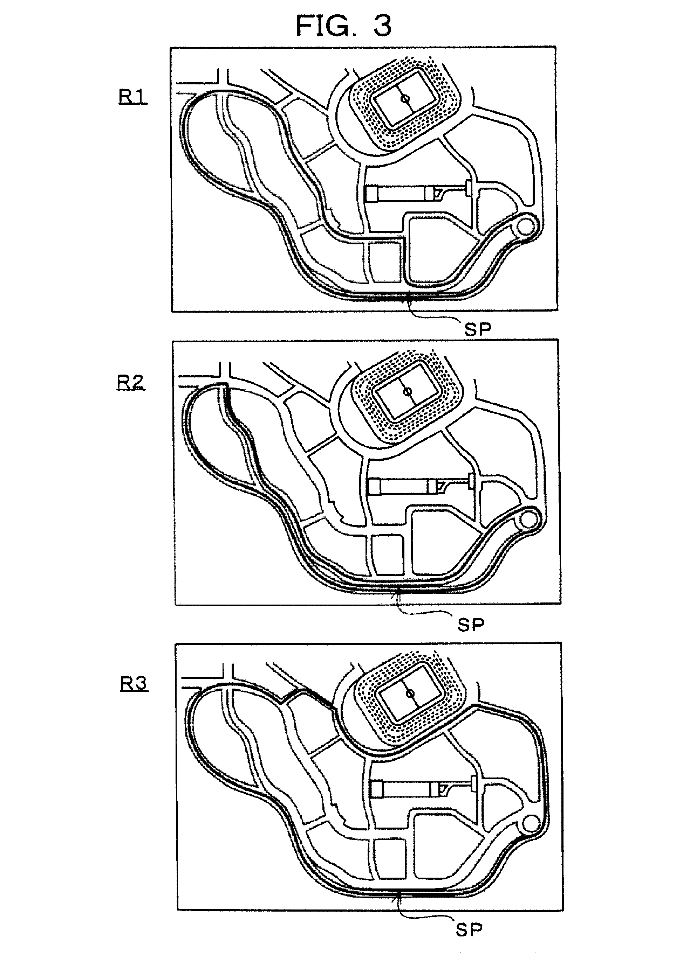

The round route in the present invention is generated from a virtual region as shown in Fig.2, for example, the plural general roads GR actually extended like a web in Britain's town TN. In this way, the virtual region of the present invention is preferably a part of an actually existing town. The general roads are actual existing roads including highways and toll ways. The general roads GR which are used in the game are set as roads where the car CA can travel in the game of the present embodiment, from the roads which actually exist in the Britain's town TN. In this embodiment, three kinds of round routes, a route R1, a route R2 and a route R3 shown in Fig.3, ware made based on the general roads GR shown in Fig.2. Hereinafter, when it is not necessary to distinguish between the route R1, the route R2 and the route R3, each of them is referred to as the "route R".

A start point SP is set at the same position for all of the routes R1, R2, R3. Thus, to each route R, the general roads are selected so that the car CA can go round the Britain's town TN by setting the start point SP as a destination point. When any one of the three routes is selected by the player, in the game image GI, the sign Sym is displayed appropriately while the car CA travelling, to make the car CA travel the selected route, the sign Sym indicating a travel direction where the car CA should travel. Also, a voice navigation is outputted with the display of the sign Sym. Moreover, in the navi image NI, similarly to a navigation image of a navigation system for a general car, the position of the car CA and the pathways of the selected route R are distinguishably displayed on the map of the Britain's town TN. By the sign Sym and the navi image NI, the player can travel on the selected route R in the web of general roads GR. Hereinafter, the display of the sign Sym and the vocal navigation are collectively referred to as the "route navigation".

on the other hand, when the car has turned off the selected route R and entered a general road GR, the pathways to the start point SP are rerouted, and the route navigation based on the pathways rerouted starts. As the result, the car CA can reach the start point SP as the destination point. In the present embodiment, the route as the result of reroute is any one of the routes R1, R2, R3. For example, when the car CA enters a general road GR off the route R1 while traveling the route R1, the route R is rerouted to the route R2 or the route R3. Thus, in the present invention, processes for changing the present route R which is set as a route to be travelled at the present to the other route R, are executed as a reroute process.

Thereby, it is possible to provide such a feeling that the player drives the general road GR by car CA, and possible to always return to the start point SP as the present route R is rerouted to the other route R even if the car CA enters the general road GR off the present route R. Moreover, as the present invention is configured so that the reroute process is executed by switching within the routes R predetermined prepared, only a little amount of processing load and processing time is required.

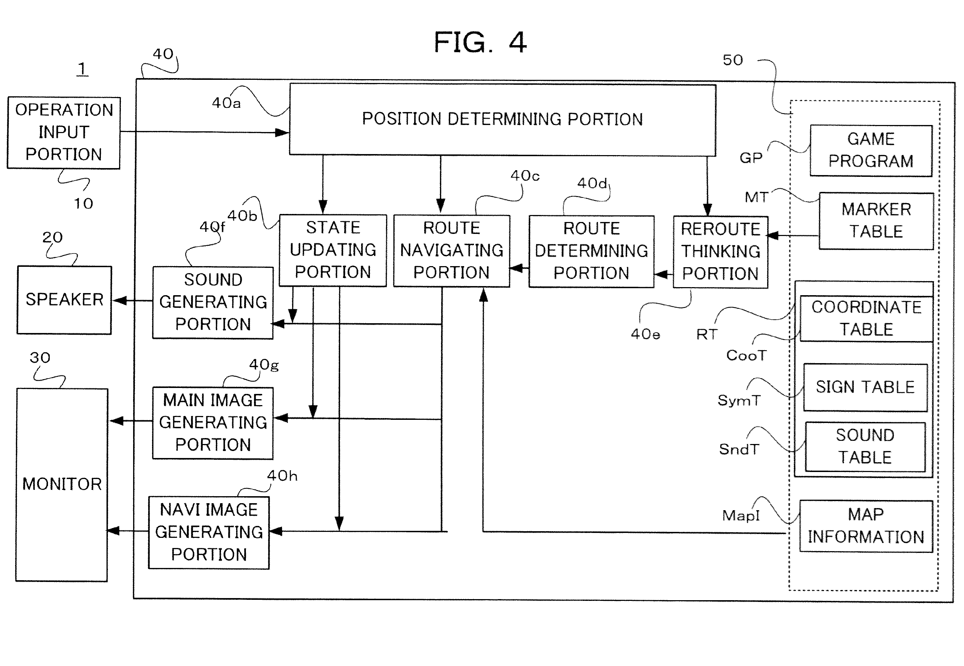

A method of executing the reroute in the game system 1 of the present invention will be described concretely. First, a hardware configuration of the game system 1 of the present invention will be described using Fig.4. The game system 1 comprises an operation input portion 10, a speaker 20, a monitor 30, and a game control unit 40. The operation input unit 10 accepts operations by the player. In the present invention, the operation input unit 10 includes a handle for a game, an accelerator pedal for a game, a brake pedal for a game and the like. The speaker 20 outputs various kinds of imitative sound and a voice navigation. In the monitor 30, mainly, the game image GI is displayed. The game control unit 40 comprises a CPU and a storage area 50 necessary for operations of the CPU, and functions as a computer. The game control unit 40 functions, by running a game program GP mentioned later, as a position determining portion 40a, a state updating portion 40b, a route navigating portion 40c, a route determining portion 40d, a reroute thinking portion 40e, a sound generating portion 40f, a main image generating portion 40g and a navi image generating portion 40h.

The sound generating portion 40f generates the imitative sound and the voice navigation and the like to be output from the speaker 20. The main image generating portion 40f and the navi image generating portion 40h generate images displayed in the main image MI and the navi image NI respectively, appropriately for the present state of the car A. The position determining portion 40a determines the present position of the car CA in accordance with the operation by the player. In the present embodiment, each position is specified by the coordinates which are obtained by setting a predetermined position in the Britain's town TN as the origin. The state updating portion 40b determines the change of the state, such as the elapsed time, travel distance and the like, posed by the change of the position of the car CA, and updates the state. The route navigating portion 40c indicates the travelling direction based on the route R and the position of the car CA, and determines the image to be displayed as the navi image NI. The reroute thinking portion 40e determines whether the reroute process should be executed or not. The route determining portion 40d determines the present route R at the moment of game start and in the case that the reroute process is executed.

In the storage area 50, a marker table MT, map information MapI, a reference table RT and a game program GP for executing the present invention are stored. The reference table RT is a table which is referred to sharedly in the game system 1 whichever the kind of route R, and, in the present embodiment, includes a coordinate table CooT, a sign table SymT, and a sound table SndT. The marker table MT and the map information MapI are prepared for each route R. The marker table MT is a table set with respect to processes executed while the car CA travelling the corresponding route. The map information MapI is information for displaying the navi image NI in such a way that the corresponding route R is displayed distinguishably in the map of the Britain's town.

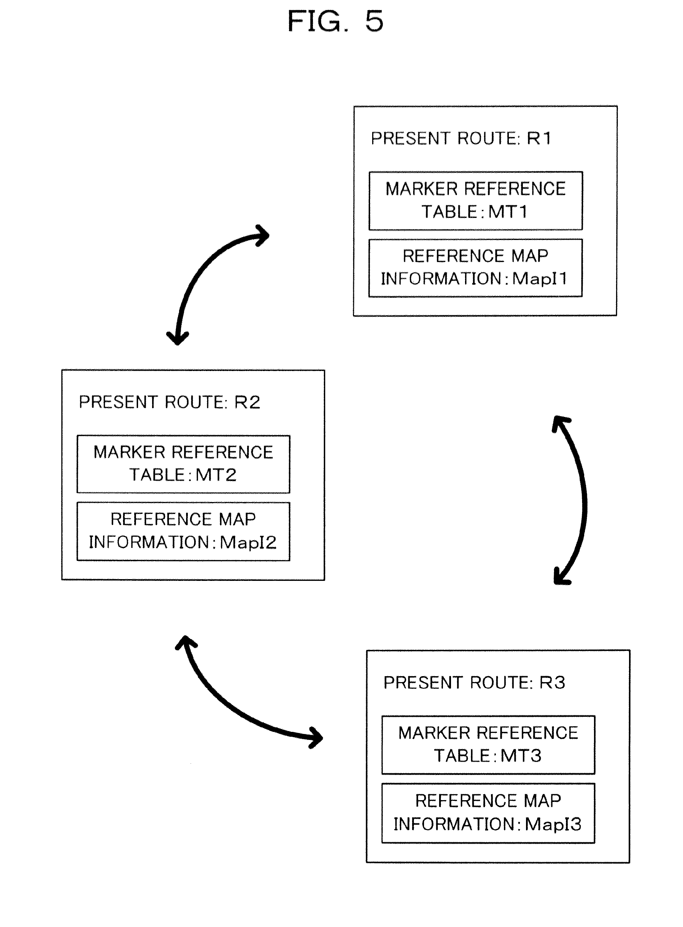

Hereinafter, the marker table MT and the map information MapI corresponding to the route R1 are referred to as the marker table MT1 and the map information MapI1 respectively, those corresponding to the route R2 are referred to as the marker table MT2 and the map information MapI2 respectively, and those corresponding to the route R3 are referred to as the marker table MT3 and the map information MapI3 respectively. At the moment of reroute, the marker table MT and the map information MapI to be referred to during the game are switched as shown in Fig. 5, with the switch of the route R as the present route R. Hereinafter, the marker table MT to be referred to is referred to as the marker reference table, and the map information MapI to be referred to is referred to as the reference map information.

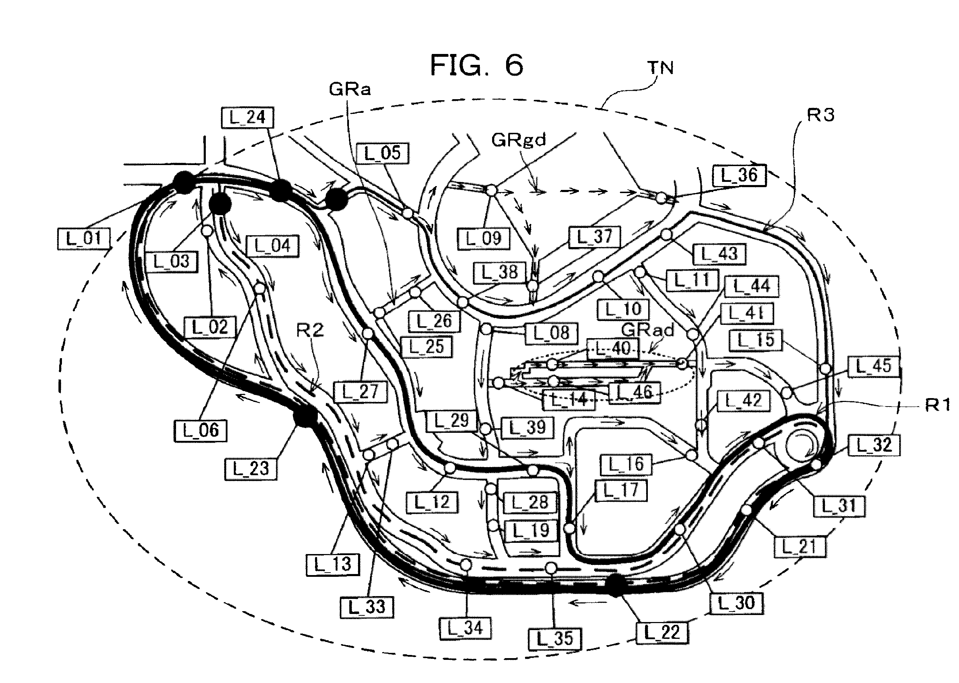

The concrete contents set in the marker table MT will be described using Figs.6 to 10. As shown in Fig.6, the markers L1 to L46 are assigned to the travelable general roads GR in the Britain's town TN. Hereinafter, when it is not necessary to distinguish between the markers L1 to L46, each of them is referred to as the "marker L". "The travelable general roads GR" may be set from all of the general roads GR in the Britain's town TN. The general roads GR may include any kinds of roads actually existing, such as toll ways, highways, and underground roads GRgd. Further, a road GRad which is not an actual road may be added to the general roads GR.

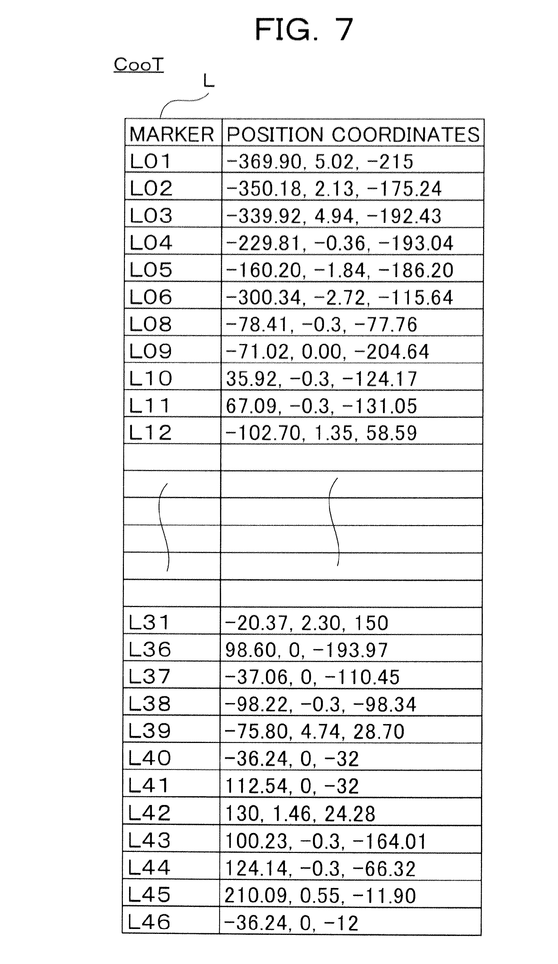

The position coordinates of each marker L are set in the coordinate table CooT which is shown in Fig.7. When the car CA reaches any one of the markers L, the process correlated to the marker L is executed. In the marker table MT, the process to be executed in association with the position of each marker L is set to each marker L.

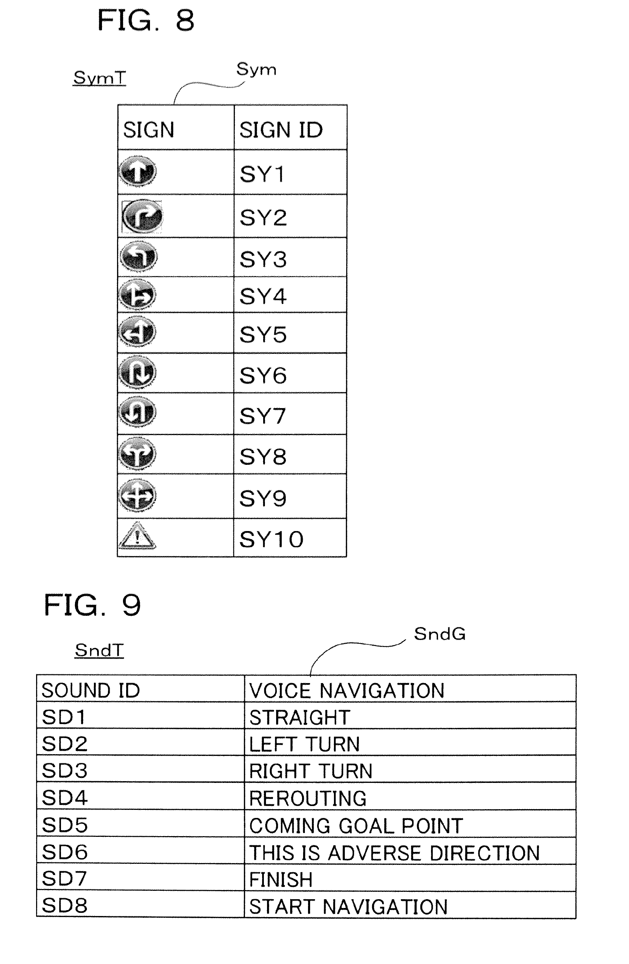

The present embodiment is designed in such a way that, as shown in Fig.6, the car CA can travel in only one direction on each general road GR. By setting only one direction of general road GR as a travelable direction, it is possible to provide a game environment similar to a general car race game. For example, when the car CA progresses in the reverse direction, the state is determined as "traveling in the reverse direction". However, the present invention is designed so that, in a portion except for the route within a rotary, even if the car CA travels in a direction different from a rotation direction, that state is not determined as "traveling in the reverse direction". The concrete processes to be executed in relation to the position of each marker L will be described taking the marker table MT1 of the route R1 as an example. In the game system 1, each of the signs Sym which is displayed in the game image GI, is recognized by the sign ID which is correlated to each sign Sym at the sign table SymT shown in Fig.8. Each type of the voice navigations which is outputted from the speaker 20, is recognized by the sound ID which is correlated to each type of voice navigation in the sound table SndT shown in Fig.9.

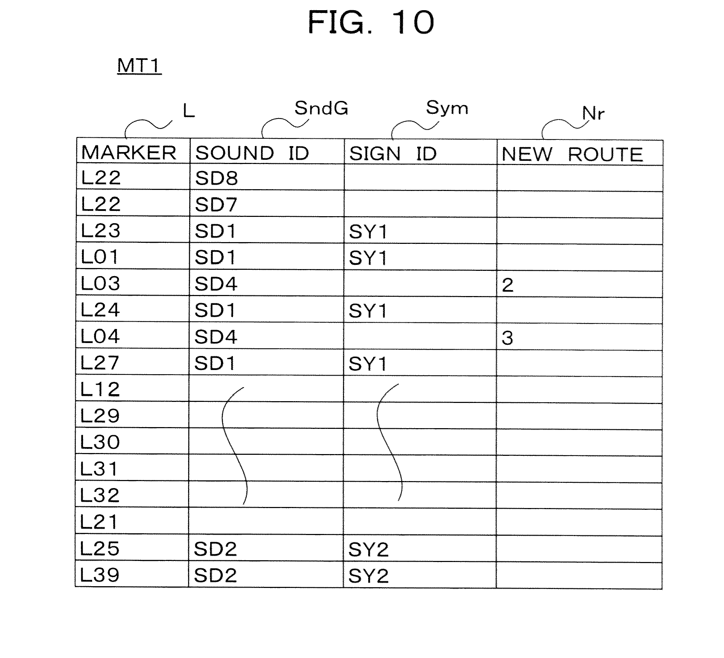

In the marker table MT1, as shown in Fig. 10, the markers L for the route R1 are set. The markers L for the route R1 include makers Lg located at navigation points, markers Lr located at reroute points, and markers Ln located at new route navigation points. The marker Lg is located on the route R1. When the car CA reaches the marker Lg, the route navigation is executed, the route navigation indicating the travelling direction for the route R1. The reroute point where the marker Lr is located is a point where the reroute process is executed, the point being located on the general road GR off but near the route R1. When the car CA reaches the marker Lr, the reroute process is executed.

The new route navigation point where the marker Ln is located is a point which exists on the general road GR connecting the route R1 and the other route R, and exists immediately before entering the route R1. When the car CA reaches the marker Ln, the route navigation is executed for indicating a direction where the car CA should travel to enter the route R1. As mentioned above, in the marker table MT1, the part where the reroute point Lr located off the route R1 is correlated to a new route Nr to become a new present route R by the reroute process, functions as a reroute table. In the marker table MT1, the part where the types of the route navigation are correlated to the navigation points Lg and the new route navigation points Ln respectively, functions as a navigation table. Thereby, the marker table MT1 functions as a process table.

In the marker table MT1, to each marker Lg, the sign Sym to be displayed and the voice navigation SndG appropriately for the sign Sym are set as the route navigation. To the marker Lr, the new route Nr which is switched as the present route R from the route R1 and the voice navigation SndG to notify the reroute are set. To the new route Nr, the route R is set, the route R connecting to the general road GR where the car CA is travelling at the moment. To the marker Ln, the sign Sym and the voice navigation SndG for the route navigation are set, so that the car CA can enter the route R1 from the general road GR where the marker Ln is set. To the marker L22 set at the start point SP, only the voice navigations SndG for the moment of start and for the moment of goal are set.

In the example shown in Fig.10, for example, after starting from the start point SP, when the car CA reaches the marker L01 as the navigation point Lg, the sign Sym indicating a going straight (SY1) is displayed in the game image GI and the voice navigation SndG of "go straight"(SD1) is outputted from the speaker 20. In a case that the car CA takes a right turn at the point where the car CA should go straight and reaches the marker L03 as the reroute point Lr, the voice navigation SndG, "reroute"(SD4), is outputted and the present route R is switched from the route R1 to the route R2 set as the new route Nr. On the other hand, when the car CA which is travelling the general road GRa toward the route R1, reaches the marker L25 as the new route navigation point Ln, in order to lead the car CA to the route R1, the sign Sym (SY2) indicating a left turn is displayed in the game image GI and the voice navigation, "left turn"(SD2), is outputted.

Also, to the marker table MT2 and the marker table MT3 of the route R2 and the route R3 respectively, in the same way as the marker table MT1, the markers Lg, Lr, Ln may be set, and the voice navigations SndG, the signs Sym and the new routes Nr may be set appropriately. For example, the marker L26 on the general road GRa existing off the route R3 is set in the marker table MT3 as the reroute point Lr of the route R3, and as the new route Nr, the route R1 which the general road GRa connects to is set. Also in each of the marker tables MT2,MT3, in the same way as the marker table MT1, the parts relating to the reroute points Lr function as the reroute table, and the parts relating to the navigation point Lg and the new route navigation point Ln function as the navigation table. Thereby, each of the marker tables MT2,MT3 functions as the process table.

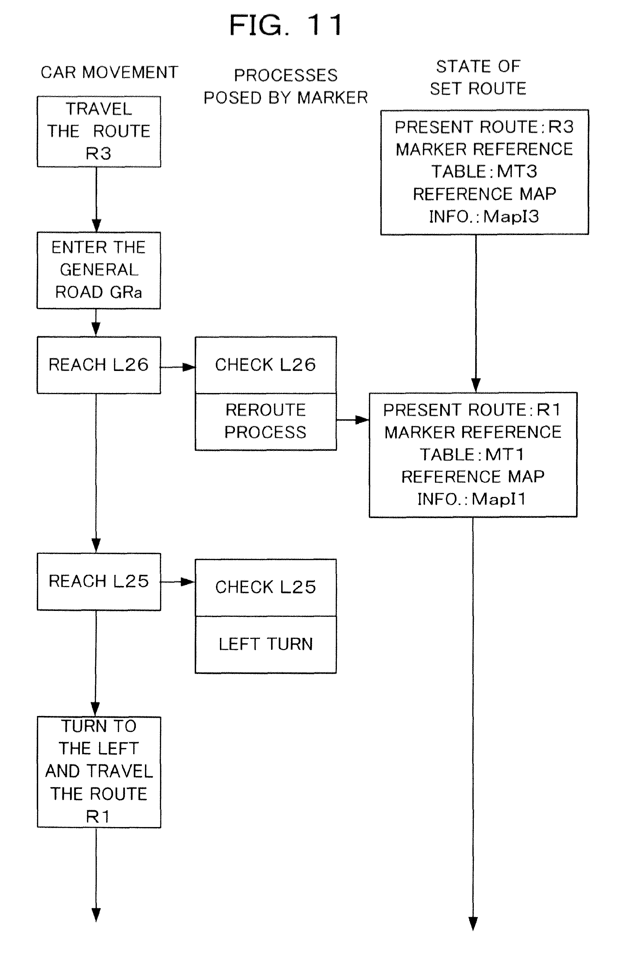

Processes, which are executed by the game control unit 40 in the case that the car CA travelling the route R3 enters the general road GRa and the present route R is changed from the route R3 to the route R1 by reroute based on the marker table MT set in the way above mentioned, will be described using Fig. 11. First, in a state that the route R3 is set as the present route R, the marker table MT3 is set as the marker reference table and the map information MapI3 is set as the reference map information. In the navi image NI, the pathways of the route R3 are distinguishably displayed based on the map information MapI3 in such a way the position of the car CA is set as a criterion.

After entering the general road GRa from the route R3, when the car CA reaches the marker L26 as the reroute point Lr, the process for the marker L26 is executed referring to the marker table MT3. As the route R1 is set as the new route Nr for the marker L26 as mentioned above, a route switch process for switching the present route R to the route R1 is executed as the reroute process. In the reroute process, the marker table MT1 is set as the marker reference table and the map information MapI1 is set as the reference map information. Thereby, when the car CA traveling the route R3 enters the general road GRa, the reroute process is executed at the marker L26, and the route R1 is set as a new present route R. In the reroute process, the voice navigation SndG ("reroute") set to the marker L26is also outputted.

Then, when the car CA reaches the marker L25, the marker table MT1, which is the marker reference table, is referred to, and a process relating to the marker L25 is executed. In the marker table MT1, as the sign Sym and the voice navigation SndG are set to the marker L25 in order to indicate a left turn, the route navigation for indicating a left turn is executed. If turning to the left by following the route navigation, the car CA can enter the route R1. By making the car CA travel the route R1, that is, by making the car CA follow the route navigation based on the marker table MT1 and the navi image NI based on the map information MapI1, it is possible to make the car CA return to the start point SP. Then, the lap time is measured. In the case that the present route R is changed to the route R1 by the reroute process, in the present embodiment, it remains that the reroute R1 is set as the present route R until the next reroute process is executed.

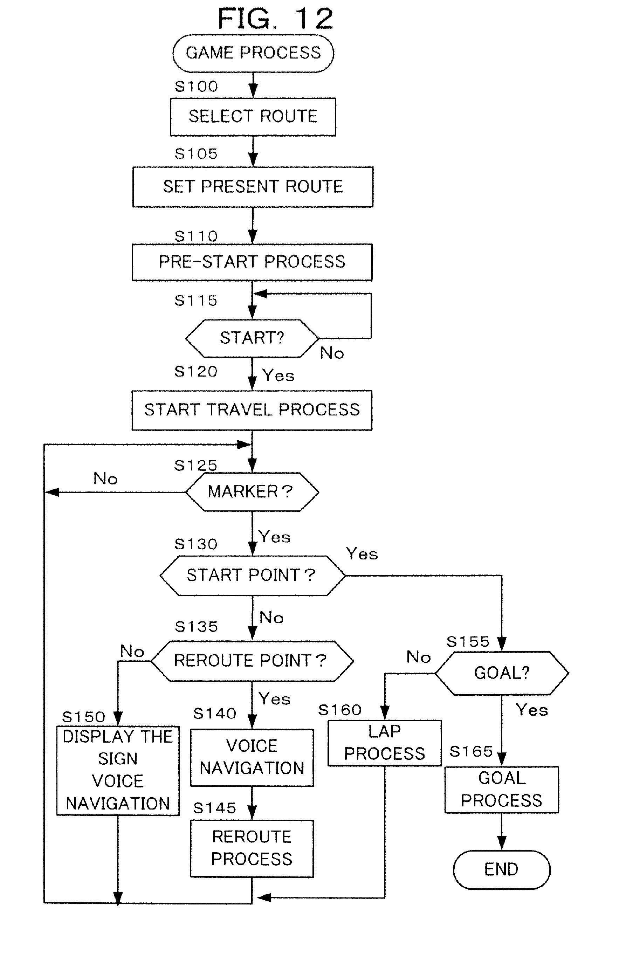

The game process will be described following a flow chart shown in Fig. 12, the game process being controlled by the game control unit 40 from the moment of game start to the moment of game end. The game process is controlled by the game control unit 40c. First, at step S100, the game control unit 40 makes the player select one route R to be used in the game from the tree routes R1 to R3. In the present embodiment, the case that the route R1 is selected will be described. Subsequently, at step S105, the selected route R1 is set as the present route R1, the marker table MT1 is set as the marker reference table, and the map information of the route R1 is set as the reference map information.

Next, the process goes to step S110 to execute a pre-start process. In the pre-start process, the position coordinates of the car CA are set to the start point SP (L22) and the value of lap count for the car CA is set to 1. And, the state that the car CA, the operation object of the player, is located at the start point SP is displayed in the monitor 30, and in the navi image NI, the position of the car CA is indicated at the start point SP of the present route R1. Subsequently, at step S115, the process becomes a waiting state for a start operation. When the start operation is performed by the player, the process goes to step S120 to start a travel process which is required for the travelling of the car CA.

In the travel process, the position determining portion 40a determines the position of the travelling car CA, the state updating portion 40b starts and updates appropriately counting the travelling timer and measuring the travel distance meter, and the route navigating portion 40c displays based on the map information MapI1 the navi image NI on the monitor 30 through the navi image generating portion 40h, the navi image NI indicating the route R1 taking the position of the car CA as a criterion. The travel process is continued until the car CA crosses the finish line. Additionally, when the car CA starts travelling, a state that the car CA starts travelling is displayed on the monitor 30 and the voice navigation SndG (SD8 "voice navigation starts") set to the marker L22 for the start moment is generated and outputted from the speaker 20.

When the travel process starts, the process goes to step S125 to become a waiting state for the car CA to reach the marker L referring to the marker table MT1 as the marker reference table. In the present embodiment, when the position coordinates of the car CA enters within a predetermined range from the coordinates of the marker L, it is determined that the car CA has reached the marker L. Hereinafter, the marker L which the car CA has reached is referred to as the "reached marker L". When it is determined that the car CA has reached any one of the markers L, the process goes to step S130 to determine whether the reached marker L is the start point SP, that is, the marker L22 or not. In the case that the marker L is not the start point SP, the process goes to step S135 to determine whether the reached marker L is the reroute point Lr or not.

In the case that a new route Nr is set to the reached marker L in the marker table T1, it is determined that the reached marker L is the reroute point. Thereby, the game control unit 40 functions as the reroute thinking portion 40e. In the case that it is determined that the reached marker L is the reroute point, the process goes to step S140 to generate and output from the speaker 20 the voice navigation SndG (SD4 "rerouting") correlated to the reached marker L, and subsequently, at step S145, the reroute process is executed. In the reroute process, the switch of present route R is executed. That is, the new route Nr is set as the present route R, and the marker table MT corresponding to the present route R set newly is set as the marker reference table, and the map information MapI of the new present route R is set as the reference map information. Thereby, the game control unit 40 functions as the route determining portion 40d.

After the reroute process, the process returns to step S125 in order to execute the process relating to the next marker L. On the other hand, in the case that it is determined that the reached marker L is not the reroute point at step S135, the process goes to step S150. At step S150, the sign Sym (for example, the sign of going straight) set to the reached marker L is displayed in the game image GI, and the voice navigation SndG (for example, "go straight") set to the reached marker L, is generated and outputted from the speaker 20. After the process of step S150, in order to execute the process for the next marker L, the process returns to step S125.

In the case that it is determined that the reached marker L is the start point SP, the process goes to step S155. At step S155, it is determined whether the car CA has crossed the finish line or not. In the case of the value of lap count=3, it is determined that the car CA has crossed the finish line. When it is determined that the car CA has not yet crossed the finish line, that is, in the case of the value of lap count<3, the process goes to step S160 to add 1 to the value of the lap count and returns to step S125 in order to execute the process for the next lap.

At step S155, when it is determined that the car CA has crossed the finish line, the process goes to step S165 to execute a goal process. In the goal process, the state that the car CA is crossing the finish line is displayed on the monitor 30, the voice navigation SndG (SD7 "finish")set to the marker L22 for the moment of finish is generated and outputted from the speaker 20. Moreover, for example, the game result is displayed based on the counted lap time and the travel distance, and various kinds of parameters of the player are updated based on the game result. After the goal process, the game process is terminated.

In the above mentioned embodiment, the game system is designed so that only the direction to follow the present route R is indicated in both of the navi image NI and the sign Sym. However, for example, the game system may be designed so that the route navigation indicates all directions where the car CA can travel similarly to actual traffic signs. Thereby, as options allowing the player to travel increase, it becomes difficult that the player selects the travel direction to follow the present route R, and due to that, a higher play skill is required. Hereinafter, the embodiment which is configured so that the route navigation indicates travelable directions in addition to the direction for the present route R is referred to as a "high level embodiment".

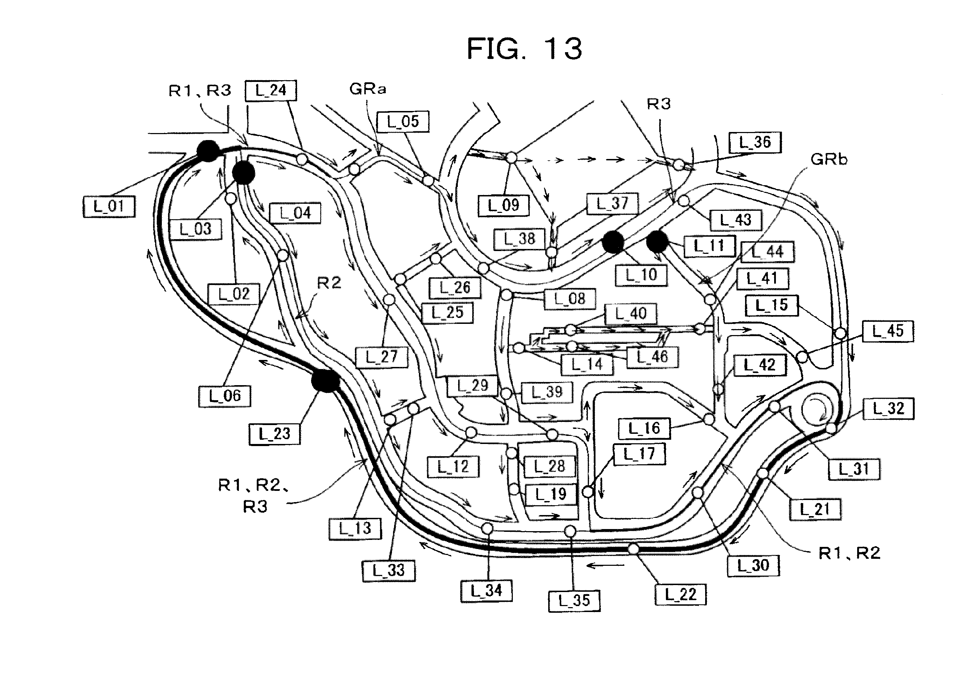

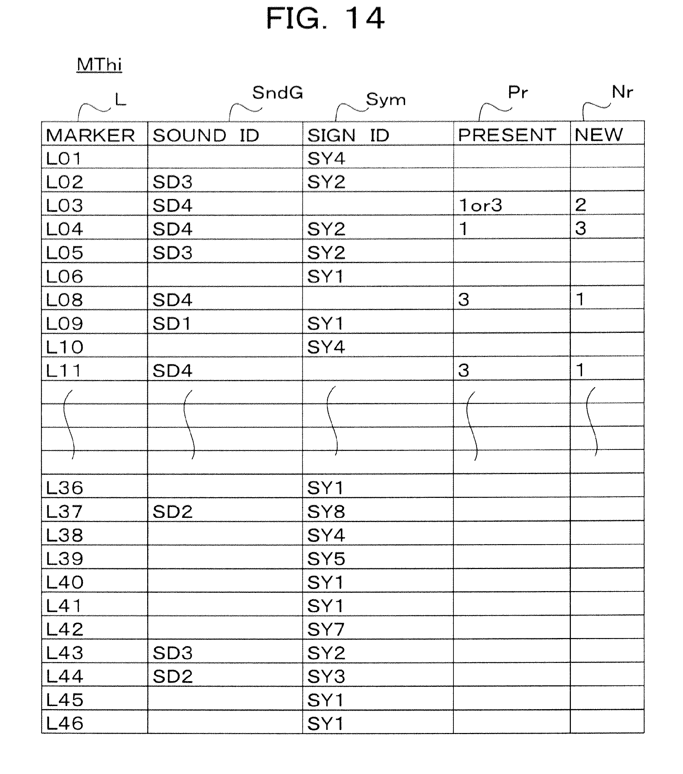

In the high level embodiment, similarly to the above mentioned embodiment, the map information MapI is provided for each route R and the map information MapI corresponding to the present route R is set as the reference map information. With respect to the marker table MT, a high-level marker table MThi shared by the three routes R1 to R3 is provided. The high-level marker table MThi is always the marker reference table regardless of kind of the present route R. The high-level marker table MThi will be described using Figs. 13 and 14. The markers L1 to L46 and the travel directions indicated on each general road GR shown in Fig.13 are the same as those shown in Fig.16.

The contents set to each marker L in the high-level marker table MThi may be set in a similar way to the contents in the marker table MT. The points different from the case of the marker table MT will be described with respect to each of the navigation point Lg, the reroute point Lr and the new route navigation point Ln individually. First, in the case of marker L as the navigation point Lg, the sign Sym of the marker L is set in such a way that the car CA can travel any general roads GR. For example, in the case of the marker L01 as the navigation point Lg, the sign (SY4) which indicates the straight direction for the routes R1 and R3 and the right-turn direction for the route R2, that is, the sign (SY4) indicating the straight direction and the right-turn direction is set so that the car CA can travel any one of the routes R1 to R3.

The general road GRb, extending in a right-turn direction from the route R3 passing through the marker L10, does not constitute any routes R. However, as the general road GRb is a travelable road, the sign sym (SY4) indicating that a straight and a right-turn are allowed is set to the marker L10. In the present embodiment, in the case of indicating two directions, the voice navigation is not available. However, for example, the voice navigation sndG such as "you can go straight or turn right" may be set to the marker L10.

With respect to the marker L which is set as the reroute point Lr in each marker table MT, the present route Pr as well as the new route Nr are set, as a reroute condition, to each of the markers L which can be the reroute point Lr. The present route Pr is a route R corresponding to the marker table MT where the marker L is set as the reroute point Lr. For example, with respect to the marker L03 on the route R2, the route R1 and the route R3 are set as the present route Pr and the route R2 is set as the new route Nr, so that it is determined that the marker L03 is the reroute point Lr only when the present route R is the route R1 or the route R3. When there exist plural routes R each of which could be the new route Nr, any one of the routes R may be set as the new route Nr.

With respect to the marker L which is set as the new route navigation point Ln, similarly to the above mentioned embodiment, the sign sym and the voice navigation sndG to indicate the travel direction may be set in such a way that the car CA which has reached the new route navigation point Ln can enter the route R set as the present route R. The high-level marker table MThi functions as the process table. Similarly to the above mentioned marker table MT, the parts relating to the reroute points Lr function as the reroute table, and the parts relating to the navigation points Lg and the new route navigation points Ln function as the navigation table.

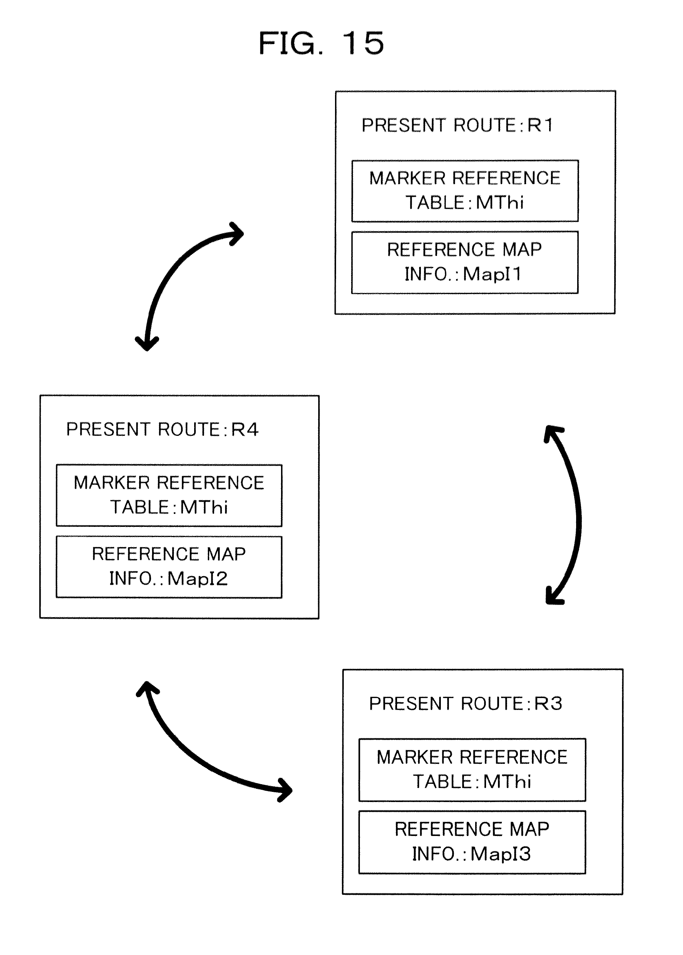

Fig. 15 shows the state where the high-level marker table MThi and the map information MapI to be referred to are switched with the switch of the present route R. As shown in Fig.15, though the reference map information is switched with the switch of the present route R, the high-level marker table MThi is referred to for any kinds of route R. Next, the game process for the high-level embodiment will be described. As processes similar to those in the game process for the above mentioned embodiment are executed in the game process for the high-level embodiment, only the parts different from the processes in the above mentioned embodiment will be described.

At step S105, whichever route R is the present route R, the high-level marker table MThi is set as the marker reference table. With respect to the determination whether the reached marker L is the reroute point Lr or not in step S135, when the route R set as the present route R is set to the reached marker as the present route Pr, it is determined that the reached marker is the reroute point Lr. In the route switching process in step S145, the map information MapI corresponding to the switched present route R is set as the reference map information, but the high-level marker table MThi remains as the marker reference table.

The present invention is not limited to the above mentioned embodiment, and may be executed in various kinds of embodiments. For example, it is not necessary that the routes of the present invention are the round routes, which have the start points SP located at the same position, and the routes having the same destination may be employed. In the case that the same destination is set, it is not necessary that the start points SP are the same position. Although the marker table MT for each route R has the portion corresponding to the reroute table, each reroute table may be set independently. In this case, it may be constructed similarly to the reroute point Lr in the high-level embodiment. The number of routes R is not limited "3", and it is enough that plural routes are prepared.

## Claims

1. A game system comprising:
an operation input portion which accepts operations by a player;
a game control position which controls a game where a plurality of routes are prepared, each of which is constructed so that a moving body as an operation object reaches a same destination through a plurality of roads extended like a web in a virtual region, and the traveling roads composing one of the routes are indicated for the moving body so that the moving body follows the route to reach the destination; and
a display portion which displays a state that the moving body travels the route, wherein
the game system further comprises:
a route information storage portion which stores route information which is information for indicating each of the plurality of routes to the player; and
a reroute table where, for each of the routes, to the reroute point which is set on each road off the route, a different route including the road off the route or a different route connecting to the road off the route is set as a new route,
the game control portion comprises:
a route determining portion which determines, from the plurality of routes, a present route which is a route where the moving body is made to travel;
a position determining portion which determines a position of the moving body appropriately to the operation by the player;
a route navigating portion which indicates the present route to the player based on the position of the moving body determined by the position determining portion and the route information of the present route; and
a reroute thinking portion which, in reference to the reroute table, determines whether the position of the moving body determined by the position determining portion has got a predetermined relation with a reroute point set on the present route, and
the route determining portion determines as the present route, when the reroute thinking portion determines that the position of the moving body has got the predetermined relation, the new route set to the reroute point in reference to the reroute table.

2. The game system of claim 1, wherein the route information of each of the routes is configured in such a way that the route forms a round route where the same destination is set as a start point.

3. The game system of claim 1 or 2, wherein
the route information is map information where each of the route is represented distinguishably in the virtual region, and
the route navigating portion displays on the display portion a navigation image where at leas one part of the present route is indicated taking the position of the moving body as a criterion.

4. The game system of any one of claims 1 to 3, further comprising a navigation table where navigation information for indicating a travelable direction is set to each of a plurality of navigation points located in each of the roads, wherein
the route navigation portion displays on the display portion, when the position of the moving body determined by the position determining portion has got a predetermined relation with the navigation point, the navigation information set to the navigation point, in reference to the navigation table.

5. The game system of claim 4, wherein
a process maker for distinguishing each of the reroute points and the navigation points is given to each of the reroute points and the navigation points,
the navigation table and the reroute table are configured as a process table in such a way that
the navigation information corresponding to the process marker is set to the process marker given to each of the navigation points, and, to the process marker given each of the reroute points, the route corresponding to the reroute point is set as the present route together with the new route.

6. The game system of claim 4, wherein
the navigation table is prepared for each of the routes, the plurality of navigation points are provided on the corresponding route,
the navigation information is set so as to indicate a travelling direction of the corresponding route, and
the route navigating portion displays on the display portion, when the position of the moving body determined by the position determining portion has got a predetermined relation with the navigation point, the navigation information set to the navigation point by referring to the navigation table of the present route.

7. The game system of claim 6, wherein
in the navigation table of each of the routes set as the new route, the navigation point is further provided on the road which connects to the route, and to the navigation point, the navigation information for leading the moving body to the route is correlated.

8. The game system of claim 7, wherein
a process marker for distinguishing each of the reroute points and the navigation points in the virtual region is given to each of the reroute points and the navigation points, and
the navigation table and the reroute table for each of the routes is configured as one process table, in which the process markers are set, the process markers being given respectively to the navigation points and the reroute points set for each of the routes, in such a way that the navigation information corresponding to each of the navigation points is set to the process marker given to the navigation point, and the new route set to each of the reroute points is set to the process marker given to the reroute point.

9. The game system of any one of claims 4 to 8, further comprising a sound output portion which outputs sound, wherein
voice navigation information for representing the navigation information by voice is further set to each of the navigation points in the navigation table, and
the route navigating portion outputs through the sound output portion, when displaying the navigation information set to the navigation portion, a voice navigation by the voice navigation information set to the navigation point.

10. The game system of any one of claims 1 to 9, wherein
the plurality of roads extended like a web in the virtual region are roads representing at least one part of general roads in a predetermined town, and the moving body is a travelling body.

11. A game program for making a computer function, the computer comprising:
an operation input portion which accepts operations by a player;
a game control position which controls a game where a plurality of routes are prepared, each of which is constructed so that a moving body as an operation object reaches a same destination through a plurality of roads extended like a web in a virtual region, and the traveling roads composing one of the routes are indicated for the moving body so that the moving body follows the route to reach the destination; and
a display portion which displays a state that the moving body travels the route;
a route information storage portion which stores route information which is information for indicating each of the plurality of routes to the player; and
a reroute table where, for each of the routes, to the reroute point which is set on each road off the route, a different route including the road off the route or a different route connecting to the road off the route is set as a new route,
wherein the game program makes the game control portion function as:
a route determining portion which determines, from the plurality of routes, a present route which is a route where the moving body is made to travel;
a position determining portion which determines a position of the moving body appropriately to the operation by the player;
a route navigating portion which indicates the present route to the player based on the position of the moving body determined by the position determining portion and the route information of the present route; and
a reroute thinking portion which, in reference to the reroute table, determines whether the position of the moving body determined by the position determining portion has got a predetermined relation with a reroute point set on the present route,
and makes the route determining portion determine as the present route, when the reroute thinking portion determines that the position of the moving body has got the predetermined relation, the new route set to the reroute point in reference to the reroute table.
